(19) Europäisches Patentamt
European Patent Office
Office européen des brevets

(11) Veröffentlichungsnummer: **0 006 516**
**B1**

(12) # EUROPÄISCHE PATENTSCHRIFT

(45) Veröffentlichungstag der Patentschrift: **22.06.83**

(51) Int. Cl.³: **C 08 G 63/62**

(21) Anmeldenummer: **79101866.6**

(22) Anmeldetag: **11.06.79**

(54) **Verfahren zur Herstellung von aliphatisch-aromatischen Polycarbonaten mit Diphenolcarbonat-Endruppen, die nach dem Verfahren erhaltenen Polycarbonate und ihre Verwendung zur Herstellung von thermoplastisch verarbeitbaren, hochmolekularen, segmentierten, aliphatisch-aromatischen Polycarbonat-Elastomeren.**

(30) Priorität: **22.06.78 DE 2827325**

(43) Veröffentlichungstag der Anmeldung:
**09.01.80 Patentblatt 80/1**

(45) Bekanntmachung des Hinweises auf die Patenterteilung:
**22.06.83 Patentblatt 83/25**

(84) Benannte Vertragsstaaten:
**DE FR GB IT NL**

(56) Entgegenhaltungen:
**DE - A - 2 425 291**
**DE - A - 2 556 739**
**DE - A - 2 636 783**
**DE - A - 2 636 784**
**DE - B - 1 162 559**
**DE - B - 1 915 908**
**DE - C - 971 777**
**FR - A - 1 235 634**
**FR - A - 2 235 965**

(73) Patentinhaber: **BAYER AG**
**Zentralbereich Patente, Marken und Lizenzen**
**D-5090 Leverkusen 1, Bayerwerk (DE)**

(72) Erfinder: **Schreckenberg, Manfred, Dr.**
**Doerperhofstrasse 15**
**D-4150 Krefeld 1 (DE)**
Erfinder: **König, Klaus, Dr.**
**Heymannstrasse 50**
**D-5090 Leverkusen 1 (DE)**
Erfinder: **Freitag, Dieter, Dr.**
**Hasenheide 10**
**D-4150 Krefeld 1 (DE)**
Erfinder: **Lehnert, Günther, Dr.**
**Saarstrasse 48**
**D-5090 Leverkusen 1 (DE)**
Erfinder: **Lindner, Christian, Dr.**
**Riehler Strasse 200**
**D-5000 Köln 60 (DE)**

(56) Entgegenhaltungen:
**Encyclopedia of Polymer Science and Technology, Band 10, 1964, JOHN WILEY & SONS, New York, Seiten 716 bis 719**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 006 516 B1

# Verfahren zur Herstellung von aliphatisch-aromatischen Polycarbonaten mit Diphenolcarbonat-Endruppen, die nach dem Verfahren erhaltenen Polycarbonate und ihre Verwendung zur Herstellung von thermoplastisch verarbeitbaren, hochmolekularen, segmentierten, aliphatisch-aromatischen Polycarbonat-Elastomeren

Gegenstand der vorliegenden Erfindung ist ein Verfahren zur Herstellung von aliphatisch-aromatischen Polycarbonaten mit Diphenolcarbonat-Endgruppen, das dadurch gekennzeichnet ist, daß aliphatische Diole und Bisphenole mit diphenylcarbonat in einem Reaktionsschritt unter Abspaltung von Phenol zu aliphatisch-aromatischen Copolycarbonaten umgesetzt werden.

Ein weiterer Gegenstand der Erfindung sind die erfindungsgemäß erhältlichen aliphatisch-aromatischen Polycarbonate mit Diphenolcarbonat-Endgruppen sowie deren Verwendung zur Herstellung von thermoplastisch verarbeitbaren, hochmolekularen, segmentierten, aliphatisch-aromatischen Polycarbonat-Elastomeren.

Aliphatische Polycarbonate sind bekannt und können gemäß DOS 1 595 446 durch Umsetzung von aliphatischen Diolen mit Phosgen hergestellt werden. Ein weiteres Verfahren zur Herstellung von aliphatischen Polycarbonaten mit Hydroxylgruppen besteht in der Umsetzung eines Diols mit Diphenylcarbonat nach dem Umesterungsverfahren (DAS 1 915 908).

Gegenstand der vorliegenden Erfindung ist ein Verfahren zur Herstellung von aliphatisch-aromatischen Polycarbonaten mit Diphenolcarbonat-Endgruppen, das dadurch gekennzeichnet ist, daß aliphatische Diole, deren OH-Gruppen zueinander mindestens $\alpha,\gamma$-ständig oder weiter voneinander entfernt sind, Kohlensäurebis-arylester (z.B. Diphenylcarbonat) und Diphenole (z.B. Bisphenol A) gemeinsam, gegebenenfalls unter Mitverwendung von Katalysatoren, bei Temperaturen zwischen 80 und 270°C und im Vakuum zwischen 266 mbar und 0,133 mbar umgesetzt werden, wobei zur Herstellung von 1 Mol des aliphatisch-aromatischen Polycarbonats n Mol aliphatisches Diol, m Mol Diphenol und p Mol Kohlensäurebisarylester eingesetzt werden, wobei n eine Zahl von 2 bis 40 und jeweils so gewählt ist, daß das Produkt aus n und dem um 26 vergrößerten Molekulargewicht $\overline{M}n$ (Zahlenmittel) des eingesetzten Diols eine Zahl zwischen 300 und 10 000, vorzugsweise 500 bis 6000 ist, und wobei m eine beliege Zahl zwischen 2 und 5 und p mindestens n + 1, höchstens aber (n + m) — 1 ist.

In der DE—PS 971 777 (Beispiele 10 und 11) werden zwar aliphatisch-aromatische Polycarbonate hergestellt, infolge der unterschiedlichen Reaktionsbedingungen bzw. Reaktantenverhältnisse entstehen jedoch Produkte mit anderer Struktur.

FR—PS 1 235 634 beschreibt die Phosgenierung von gemischten aliphatisch-aromatischen Polycarbonaten mit phenolischen OH-Gruppen. Diese OH-gruppenhaltigen Vorprodukte können beispielsweise auch durch Umesterung von Bisphenol, Diol und Diphenylcarbonat erfolgen (Seite 5, rechte Spalte, 3. Absatz). Nähere Angaben darin fehlen, da die Vorprodukte stets über die Chlorkohlensäureester der Diole im einzelnen synthetisiert werden. Darüber hinaus wird (Spalte 2, 3. Absatz) hervorgehoben, daß die OH-gruppenhaltigen Vorprodukte die Reste der aliphatischen Diole und Diphenole alternierend enthalten.

DE—OS 2 636 784 unterscheidet sich bezüglich der Herstellung der Bis-diphenol-carbonate, die in einer Zweistufenreaktion erfolgt, sowie bezüglich der Struktur der Bis-diphenol-carbonate, deren aliphatische Teile nicht in Form von über Carbonatgruppen verlängerten Blöcken vorliegen.

Die vorliegende Erfindung wird durch die drei vorstehenden Literaturstellen weder vorweggenommen, noch nahegelegt.

Für die Länder DE, FR, GB und IT wird eine unterschiedliche eingeschränkte Anspruchsfassung vorgelegt wegen der nicht vorveröffentlichten EU—PS 60 (Art. 54.3 und 4 EPÜ) bzw. der nationalen italienischen Anmeldung Nr. 49789/78.

Die erhaltenen Bis-diphenolcarbonate haben beispielsweise die folgende idealisierte Formel (I)

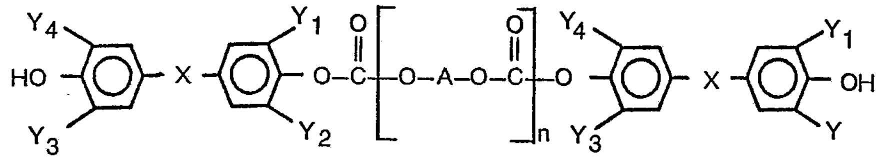

(I),

worin

A der bivalente Rest eines aliphatischen Diols ist, und die Endgruppen aus den Diphenolen der Formel (II) resultieren

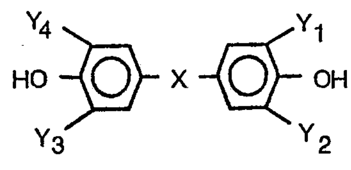

(II)

worin
X eine Einfachbindung,

$-CH_2-$, 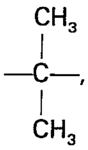, 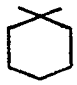, O, S, $SO_2$ oder 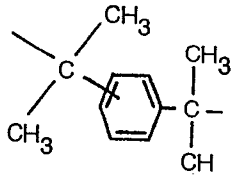 bedeuten und

$Y_1$ bis $Y_4$ gleich oder verschieden sind und Wasserstoff $C_1$—$C_4$-Alkyl, wie beispielsweise Methyl oder Halogen, wie beispielsweise Chlor oder Brom, und
n eine Zahl von 2 bis 40 bedeuten.

Geeignete Katalysatoren für die erfindungsgemäße Herstellung der aliphatisch-aromatischen Polycarbonate mit Diphenol-carbonat-Endgruppen sind:

a) Übergangsmetallverbindungen wie
Titansäuretetraalkylester,
Dialkylzinndicarboxylate,
Zinndicarboxylate,
Chelate von Fe, Zn, Co, Ni, Pb
Carboxylate von Pb, Co, Ni, Fe und
b) Basen wie tert. Amine oder Oxide, Hydroxide, Carbonate, Alkoholate, Phenolate oder Carboxylate von Alkali- oder Erdalkalimetallen.

Der Katalysator wird in Mengen zwischen 0,0001 bis 1 Gew.-%, vorzugsweise 0,001 bis 0,1 Gew.-%, bezogen auf das Gesamtgewicht des eingesetzten Reaktionsgemisches, verwendet.

Das erfindungsgemäße Verfahren ist dadurch gekennzeichnet, daß die Polykondensation von aliphatischen Diolen und aromatischen Diphenolen mit Kohlensäure-bis-arylestern bei 80—270°C, vorzugsweise bei 100—220°C, und im Vakuum zwischen 266 mbar und 0,133 mbar durchgeführt wird, bis ca. 99,9% des bei der Reaktion freiwerdenden Phenols abdestilliert sind.

Restmengen Phenol können dann mit inertem Gas ausgeblasen werden.

Das erfindungsgemäße Verfahren zur Herstellung der aliphatisch-aromatischen Polycarbonate mit Diphenol-carbonat-Endgruppen erfolgt vorzugsweise in Abwesenheit von Lösungsmitteln für die Reaktanten, insbesondere in Substanz.

Die Reaktionszeit für das Umesterungsverfahren zur Herstellung der aliphatisch-aromatischen Polycarbonate mit Diphenol-carbonat-Endgruppen beträgt in Abhängigkeit von Reaktionstemperatur sowie Art und Menge des Katalysators zwischen 2 und 60 Stunden.

Überraschenderweise entstehen bei der gemeinsamen Kondensation nicht unregelmäßige Polycarbonatgemische mit aliphatischen und aromatischen OH-Gruppen, sondern es erfolgt zunächst eine selektive Kondensation der aliphatischen Komponente. Das Diphenol greift erst am Ende der Reaktion ein und wird mit den Kettenenden des Polycarbonats verknüpft, so daß in der erfindungsgemäßen Produkten der in den Rezepturen vorgegebene OH-Überschuß von 2 Mol fast ausschließlich in Form von phenolischen OH-Endgruppen enthalten ist.

Geeignete Kohlensäure-bis-arylester sind inbesondere die der Formel (III)

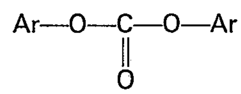 (III),

worin
Ar ein substituierter oder unsubstituierter Arylrest mit 6 bis 18 C-Atomen ist.

Als Substituent kommen besonders $C_1$—$C_4$-Alkyle sowie Nitro, Halogen, wie beispielsweise Chlor oder Brom, in Frage. Beispiele dafür sind Diphenylcarbonat, alkylsubstituierte Diphenylcarbonate wie die Di-toluylcarbonate, halogen-substituierte Diphenylcarbonate, wie die Di-chlorphenylcarbonate, Dinaphthylcarbonat sowie alkyl-substituierte und halogensubstituierte Dinaphthylcarbonate; hierbei können die Nitro-, Alkyl- oder Halogensubstituenten an beiden Phenylkernen bzw. an beiden Naphthylkernen der Diarylcarbonate gleich oder ungleich sein bzw. symmetrisch oder unsymmetrisch zueinander sein. Es sind also beispielsweise auch Phenyl-toluyl-carbonat, Phenyl-chlorphenyl-carbonat, 2-Toluyl-4-toluyl-carbonat oder 4-Toluyl-4-chlorphenyl-carbonat für das Verfahren geeignet.

Für die erfindungsgemäße Herstellung der aliphatisch-aromatischen Polycarbonate mit Diphenol-carbonat-Endgruppen geeignete Diole sollen Molekulargewichte $\overline{M}n$ von 76 bis 400, vorzugsweise von 76 bis 300 haben und sind beispielsweise die folgenden:

1,3-Propandiol, 1,4-Butandiol, 1,5-Pentandiol, 3-Methylpentandiol-1,5, Trimethylhexandiol-1,6, 1,6-Hexandiol, 1,12-Dodecandiol, 1,12-Octadecandiol, Diäthylenglykol, Triäthylenglykol* und deren höhere Homologe*, Dipropylenglykol, Tripropylenglykol*, Neopentylglykol.

Weitere erfindungsgemäß geeignete Diole sind die nachfolgend genannten präpolymeren aliphatischen Polycarbonatdiole, die aus Glykolen wie Di-, Tri-* und Tetraäthylenglykol*, Hexandiol-(1,6), Butandiol-1,4, Dodecandiol-(1,12), durch Umesterung mit Diäthylcarbonat oder Diphenylcarbonat bzw. durch Umsetzung mit Phosgen nach bekannten Verfahren hergestellt werden, sofern sie bezüglich ihrer OH-Gruppen den eingangs geforderten Bedingungen genügen und ein Molekulargewicht $\overline{M}n$ (Zahlenmittel) von 300 bis 3000 haben.

Für die erfindungsgemäße Herstellung der aliphatisch-aromatischen Polycarbonate mit Diphenolcarbonat-Endgruppen geeignete Diphenole sind;

Hydrochinon
Resorcin
Dihydroxydiphenyle
Bis-(hydroxyphenyl)-alkane
Bis-(hydroxyphenyl)-cycloalkane
Bis-(hydroxyphenyl)-sulfide
Bis-(hydroxyphenyl)-äther
Bis-(hydroxyphenyl)-ketone
Bis-(hydroxyphenyl)-sulfoxide
Bis-(hydroxyphenyl)-sulfone
$\alpha,\alpha$-Bis-(hydroxyphenyl)-diisopropylbenzole

sowie deren kernalkylierte und kernhalogenierte Verbindungen. Diese und weitere geeignete aromatische Dihydroxyverbindungen sind z.B. in den US-Patentschriften 3 028 365, 2 999 835, 3 481 172, 2 991 273, 3 217 367, 3 014 891 und 2 999 846 und in den deutschen Offenlegungsschriften 2 063 050, 2 211 957 aufgeführt.

Geeignete Diphenole sind beispielsweise Bis-(4-hydroxyphenyl)-methan
4,4'-Dihydroxydiphenyl
2,4-Bis-(4-hydroxyphenyl)-2-methylbutan
$\alpha,\alpha$-Bis-(4-hydroxyphenyl)-p-diisopropylbenzol
2,2-Bis-(3-chlor-4-hydroxyphenyl)-propan
2,2-Bis-(3,5-dimethyl-4-hydroxyphenyl)-propan.

Bevorzugte Diphenole sind beispielsweise
2,2-Bis-(4-hydroxyphenyl)-propan
1,1-Bis-(4-hydroxyphenyl)-cyclohexan
2,2-Bis-(3,5-dichlor-4-hydroxyphenyl)-propan
2,2-Bis-(3,5-dibrom-4-hydroxyphenyl)-propan
2,2-Bis-(3,5-dimethyl-4-hydroxyphenyl)-propan
Bis-(3,5-dimethyl-4-hydroxyphenyl)-methan und
Bis-(4-hydroxyphenyl)-sulfid.

Die erfindungsgemäß geeigneten Diphenole können sowohl allein als auch zu mehreren eingesetzt werden.

Erfindungsgemäße aliphatisch-aromatische Polycarbonate mit Diphenol-carbonat-Endgruppen sind somit beispielsweise die der idealisierten Formeln Ia—Ii

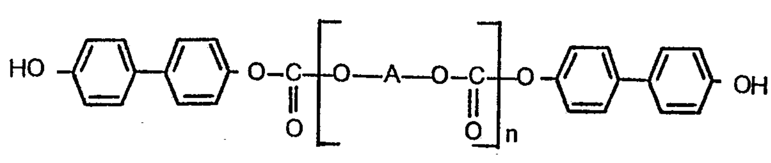

(Ia)

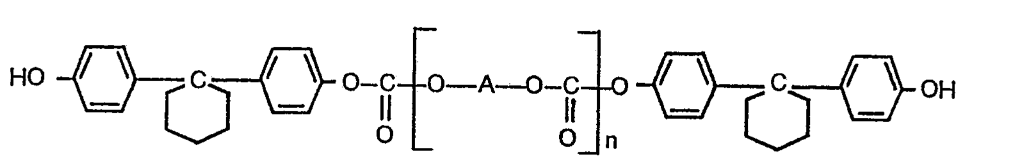

(Ib)

* nur für NL

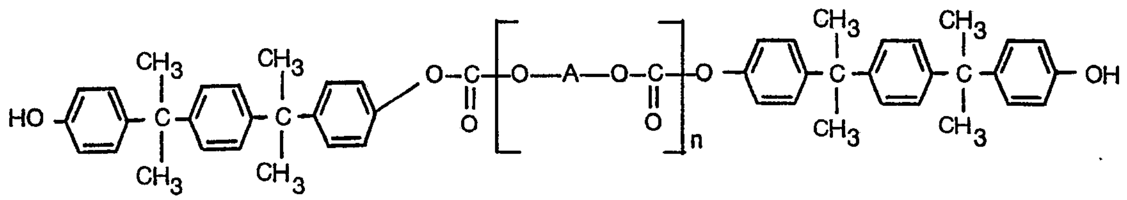

(Ic)

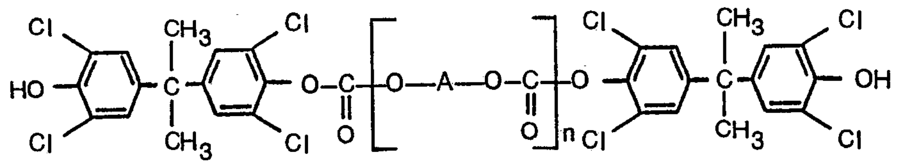

(Id)

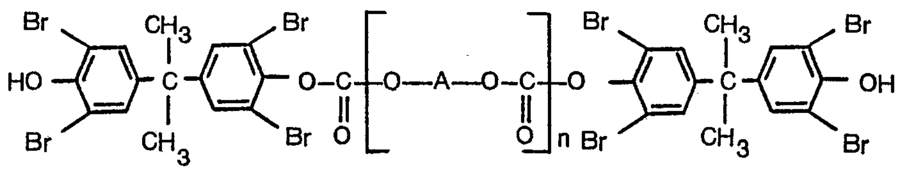

(Ie)

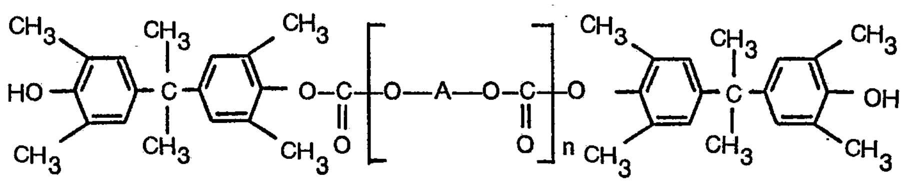

(If)

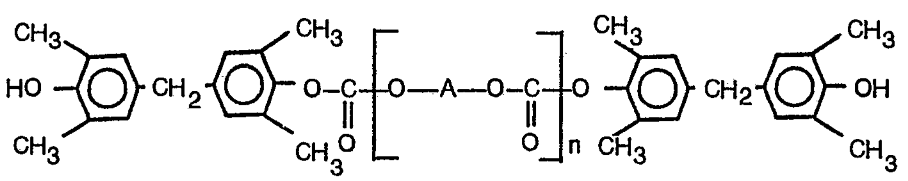

(Ig)

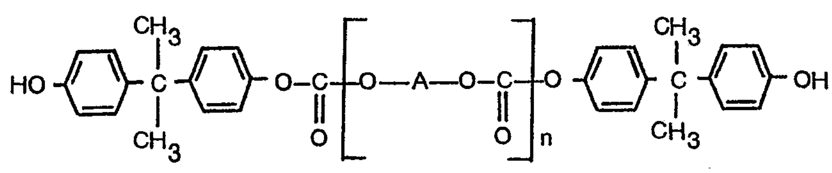

(Ih)

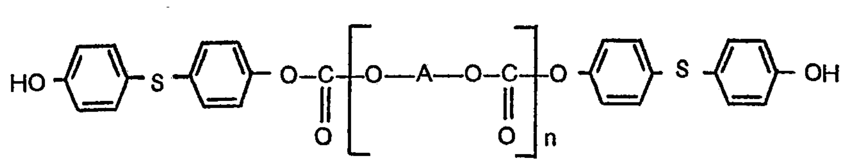

(Ii),

worin A der bivalente Rest der erfindungsgemäß geeigneten Diole mit $\overline{M}n$ von 76 bis 400, vorzugsweise von 76 bis 300 ist und n eine Zahl von 2 bis 40 bedeutet.

Die erfindungsgemäßen aliphatisch-aromatischen Polycarbonate mit Diphenol-carbonat-Endgruppen können als Ausgangsbisphenole bei der Herstellung für Polycarbonate nach dem bekannten Zweiphasengrenzflächenpolykondensationsverfahren eingesetzt werden. Man erhält so hochmolekulare aliphatisch-aromatische Polycarbonat-Elastomere eines bestimmten Aufbaus.

Gegenstand der vorliegenden Erfindung ist somit die Herstellung von hochmolekularen aliphatisch-aromatischen Polycarbonat-Elastomeren, die dadurch gekennzeichnet ist, daß man die erfindungsgemäßen aliphatisch-aromatischen Polycarbonate mit Diphenol-carbonat-Endgruppen, insbesondere die der Formel (I), mit anderen Diphenolen, insbesondere denen der Formel (II), und mit Phosgen in einem Flüssigkeitsgemisch aus inertem organischem Lösungsmittel und alkalischer wäßriger Lösung bei Temperaturen zwischen 0°C and 80°C, vorzugsweise zwischen 15°C und 40°C, bei einem pH-Wert zwischen 9 und 14 umsetzt und nach der Phosgenierung durch Zugabe von 0,2 Mol-% bis 10 Mol-% an tertiären aliphatischen Aminen, bezogen auf die Molmenge an Diphenol, polykondensiert, wobei das Gewichtsverhältnis von aliphatisch-aromatischen Polycarbonaten mit Diphenolcarbonat-Endgruppen zu anderem Diphenol von dem gewünschten aromatischen Polycarbonatanteil und dem aliphatischen Polycarbonatanteil der hochmolekularen-aliphatisch-aromatischen Polycarbonat-Elastomere bestimmt wird. Vorzugsweise liegt das Gewichtsverhältnis von aliphatischaromatischem Polycarbonat mit phenolischen Endgruppen zu anderem Diphenol zwischen 2:1 und 1:2. Hierbei werden für die Phosgenierung Zeiten zwischen 5 Minuten und 90 Minuten, für die Polykondensation Zeiten zwischen 3 Minuten und 3 Stunden benötigt.

Morphologisch gesehen weisen die erfindungsgemäß erhaltenen hochmolekularen aliphatisch-aromatischen Polycarbonat-Elastomere vorzugsweise zwei verschiedene, räumlich getrennte Phasen, d.h. Bereiche, auf, die sich aus einer amorphen aliphatischen Polycarbonatphase (Weichsegmentphase) und einer amorphen bzw. amorphkrystallinen aromatischen Polycarbonatphase (Hartsegmentphase) zusammensetzen.

Eingehende Erläuterungen über die Phasentrennung von Weichsegmentphase zur Hartsegmentphase werden in DOS 2636783 und DOS 26 36784 beschrieben.

Die erfindungsgemäßen hochmolekularen aliphatisch-aromatischen Polycarbonat-Elastomere haben im Falle ihrer Mehrphasigkeit eine bessere Wärmeformbeständigkeit als vergleichbare einphasige Polycarbonat-Elastomere.

Einphasige Polycarbonat-Elastomere sind beispielsweise in US-Patent 3 151 615 beschrieben. Sie sind nach verschiedenen Verfahren erhältlich, vorzugsweise jedoch nach dem von der Polycarbonatherstellung bekannten "Pyridinverfahren".

Die Herstellung von zweiphasigen Polymeren, beispielsweise von Polycarbonat-Polycaprolactonen gelingt bislang nur mittels Bischlorameisensäureestern von Polycaprolactonen und Polycarbonat-Oligomeren (siehe französische Patentschrift 2 235 965).

Entsprechendes gilt auch für die obwohl nicht als zweiphasig ausgewiesenen Polycarbonat-Elastomeren der DT—AS 1 162 559.

Die erfindungsgemäße Verwendung der erfindungsgemäßen aliphatisch-aromatischen Polycarbonate mit Diphenolcarbonat-Endgruppen hat gegenüber der Verwendung von entsprechenden Bischlorameisensäureestern den Vorteil der Hydrolyseunempfindlichkeit und somit besseren Lagerfähigkeit und eindeutig bifunktionellen Reaktivität.

Die hochmolekularen, segmentierten, thermoplastisch verarbeitbaren aliphatisch-aromatischen Polycarbonat-Elastomere, hergestellt nach dem erfindungsgemäßen Verfahren, zeigen neben der besonderen thermischen Belastbarkeit gute Transparenz, hochelastisches Verhalten und hervorragende Reißdehnung von >200%.

Die für die erfindungsgemäße Herstellung der aliphatisch-aromatischen Polycarbonat-Elastomere aus den erfindungsgemäßen aliphatisch-aromatischen Polycarbonaten mit Diphenol-carbonat-Endgruppen geeigneten anderen Diphenole sind die bereits für die Herstellung der aliphatisch-aromatischen Polycarbonate mit Diphenol-carbonat-Endgruppen auf Seite 7 und 8 dieser Patentanmeldung genannten, insbesondere die der Formel (II) von Seite 3 dieser Patentanmeldung; geeignet sind beispielsweise

4,4'-Dihydroxy-diphenyl
Bis-(4-hydroxyphenyl)-methan
2,4-Bis-(4-hydroxyphenyl)-2-methylbutan
$\alpha,\alpha$-Bis-(4-hydroxyphenyl)-p-diisopropylbenzol
2,2-Bis-(3-chlor-4-hydroxyphenyl)-propan
Bis-(4-hydroxyphenyl)-sulfid
2,2-Bis-(3,5-dimethyl-4-hydroxyphenyl)-propan und
Bis-(3,5-dimethyl-4-hydroxyphenyl)-methan.

Vorzugsweise werden für die erfindungsgemäße Herstellung der hochmolekularen aliphatisch-aromatischen Polycarbonat-Elastomere als andere Diphenole 2,2-Bis-(4-hydroxyphenyl)-propan, 2,2-Bis-(3,5-dichlor-4-hydroxyphenyl)-propan, 2,2-Bis-(3,5-dibrom-4-hydroxyphenyl)-propan, 1,1-Bis-(4-hydroxyphenyl)-cyclohexan, Bis-(4-hydroxyphenyl)-sulfid, Bis-(3,5-dimethyl-4-hydroxyphenyl)-methan und 2,2-Bis-(3,5-dimethyl-4-hydroxyphenyl)-propan verwendet. Es können auch beliebige Mischungen dieser anderen Diphenole eingesetzt werden.

Durch den Einbau geringer Mengen an tri- oder mehr als trifuktionellen Verbindungen, insbesondere solchen mit drei oder mehr als drei phenolischen Hydroxygruppen, vorzugsweise zwischen 0,05—2 Mol-% (bezogen auf die eingesetzten Diphenole), erhält man verzweigte Produkte mit besserem Fließverhalten bei der Verarbeitung.

Als tri- bzw. mehr als trifunktionelle Verbindung sind beispielsweise geeignet:
Phloroglucin, 4,6-Dimethyl-2,4,6-tri-(3-hydroxyphenyl)-hepten-2, 4,6-Dimethyl-2,4,6-tri(4-hydroxyphenyl)-heptan, 1,3,5-Tri-(4-hydroxyphenyl)-benzol, 1,1,1-Tri-(3-hydroxyphenyl)-äthan, Tri-(4-hydroxy-

phenyl)-phenylmethan, 2,2-Bis-[4,4-(4,4'-dihydroxydiphenyl)cyclohexyl]-propan, 2,4-Bis-(4-hydroxyphenyl-isopropyl)-phenol, 2,6-Bis-(2'-hydroxy-5'-methyl-benzyl)-4-methyl-phenol, 2,4-Dihydroxybenzoesäure, 2-(4-Hydroxyphenyl)-2-(2,4-dihydroxyphenyl)-propan und 1,4-Bis(4',4''-dihydroxytriphenyl-methyl)-benzol und 3,3-Bis-(4-hydroxyphenyl)-2-oxo-2,3-dihydroindol sowie 3,3-Bis-(3-methyl-4-hydroxyphenyl)-2-oxo-2,3-dihydroindol.

Die Verzweigung der erfindungsgemäßen hochmolekularen aliphatisch-aromatischen Polycarbonat-Elastomere kann auch über die Weichsegmentkomponente erfolgen und zwar dadurch, daß man bei der Herstellung der aliphatisch-aromatischen Polycarbonate mit Diphenol-carbonat-Endgruppen Polyole mit mehr als 2 aliphatischen OH-Gruppen, insbesondere Triole bzw. Tetraole mitverwendet.

Die Kettenlänge der hochmolekularen aliphatisch-aromatischen Polycarbonat-Elastomere kann durch Zugabe eines Kettenabbrechers, z.B. eines monofunktionellen Phenols wie Phenol, 2,6-Dimethylphenol, p-Bromphenol, oder p-tert.-Butylphenol eingestellt werden, wobei pro Mol an eingesetztem Diphenol zwischen 0,1 und 10 Mol-% Kettenabbrecher eingesetzt werden können.

Die erfindungsgemäße Herstellung der hochmolekularen, segmentierten, thermoplastisch vararbeitbaren aliphatisch-aromatischen Polycarbonat-Elastomere erfolgt nach dem Zweiphasengrenzflächen-Polykondensationsverfahren, vorzugsweise derart, daß eines der vorgenannten anderen Diphenole oder Gemische der vorgenannten anderen Diphenole, insbesondere die der Formel (II) in alkalischer wäßriger Lösung gelöst werden, während die erfindungsgemäßen aliphatisch-aromatischen Polycarbonate mit Diphenol-carbonat-Endgruppen, insbesondere die der Formel (I), oder deren Gemische in einem mit Wasser nicht mischbaren inerten organischen Lösungsmittel gelöst und beide Lösungen vor der Phosgenierung vermischt werden.

Die nach beendeter Reaktion erhaltenen Lösungen der hochmolekularen aliphatisch-aromatischen Polycarbonat-Elastomere in den organischen Lösungsmitteln werden analog den Lösungen der nach dem Zweiphasengrenzflächenverfahren hergestellten thermoplastischen Polycarbonate aufgearbeitet, wobei die hochmolekularen aliphatisch-aromatischen Polycarbonate außerdem nachbehandelt werden können und zwar werden sie entweder

a) isoliert nach bekannten Verfahren, beispielsweise durch Ausfällen mit Methanol oder Äthanol, und anschließend getrocknet und getempert, oder Scherkräften unterworfen oder in organischen Lösungsmitteln gelöst und gelieren lassen oder

b) bei der Isolierung beispielsweise im Ausdampfextruder bereits Scherkräften unterworfen oder

c) vor der Isolierung in dem bei der Herstellung der hochmolekularen aliphatisch-aromatischen Polycarbonate nach dem Zweiphasengrenzflächenverfahren verwendeten Lösungsmittel gelieren lassen.

Als inerte organische Lösungsmittel für das Herstellungsverfahren der hochmolekularen aliphatisch-aromatischen Polycarbonat-Elastomere sind mit Wasser nicht mischbare aliphatische Chlorkohlenwasserstoffe wie Methylenchlorid, Chloroform und 1,2-Dichloräthan, oder chlorierte Aromaten, wie Chlorbenzol, Dichlorbenzol und Chlortoluol oder Mischungen aus diesen Lösungsmitteln geeignet.

Als alkalisch wäßrige Lösungen für das erfindungsgemäße Verfahren eignen sich Lösungen von LiOH, NaOH, KOH, Ca $(OH)_2$ oder Ba $(OH)_2$ in Wasser.

Als tertiäre aliphatische Amine für das erfindungsgemäße Verfahren sind solche mit 3 bis 15 C-Atomen geeignet, also beispielsweise Trimethylamin, Triäthylamin, n-Tripropylamin und n-Tributylamin; die Menge variiert je nach eingesetztem Diphenol zwischen 0,2 und 5 Mol-%, bei Einsatz von tetramethyl-substituierten Diphenolen zwischen 5 und 10 Mol-%, bezogen jeweils auf die Gesamtmenge an eingesetzten Diphenolen (= jeweilige Summe aus aliphatisch-aromatischen Polycarbonat mit Diphenol-carbonat-Endgruppen und anderen Diphenolen).

Die hochmolekularen aliphatisch-aromatischen Polycarbonat-Elastomere können gemäß DOS 2 636 783 und DOS 2 636 784 isoliert werden.

Die erfindungsgemäße Umsetzung der erfindungsgemäßen aliphatisch-aromatischen Polycarbonate mit anderen Diphenolen und mit Phosgen nach dem Zweiphasengrenzflächenverfahren erfolgt quantitativ; somit bestimmt sich das jeweilige Reaktantenverhältnis von aliphatischaromatischem Polycarbonat zu anderem Diphenol aus dem aromatischen Polycarbonatanteil den das jeweils zu synthetisierende hochmolekulare aliphatisch-aromatische Polycarbonat haben soll.

Der aromatische Polycarbonatanteil in den nach dem erfindungsgemäßen Verfahren hergestellten hochmolekularen aliphatisch-aromatischen Polycarbonat-Elastomeren liegt, je nach gewünschten Eigenschaftsbild, etwa zwischen 30 und 95, vorzungsweise etwa 35 und 80 Gew.-%, wobei mit steigendem aromatischen Polycarbonatanteil die Härte und Wärmeformbeständigkeit zunimmt und die Elastizität und Reißdehnung abnimmt.

Als aromatischer Polycarbonatanteil der erfindungsgemäßen hochmolekularen aliphatisch-aromatischen Polycarbonate ist die Gewichtsmenge an aromatischen Carbonatstruktureinheiten der folgenden Formel (IV)

$$\left[ -D-\underset{\underset{O}{\|}}{C}- \right] \qquad (IV)$$

worin D für die Diphenolat-Reste im hochmolekularen aliphatisch-aromatischen Polycarbonat steht, insbesondere an aromatischen Carbonatstruktureinheiten der Formel (IIa) zu verstehen

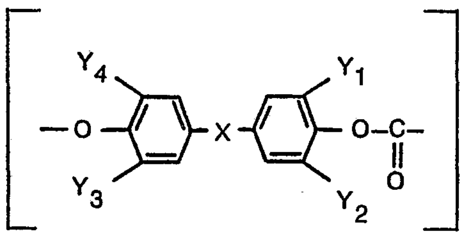

(IIa),

worin X und $Y_1$ bis $Y_4$ für die Formel (II) genannte Bedeutung haben.

Als Weichsegmentanteil der erfindungsgemäßen hochmolekularen aliphatisch-aromatischen Polycarbonat-Elastomere ist demzufolge die Gewichtsmenge an aliphatischen Poly-Carbonatstruktureinheiten (V) eines der auf Seite 7 beschriebenen Diole der vereinfachten Formel

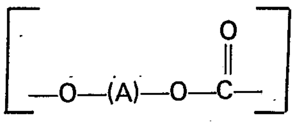

, (V)

zu verstehen.

Erfindungsgemäße bevorzugte hochmolekulare aliphatisch-aromatische Polycarbonate sind beispielsweise solche, die 30 bis 95 Gew.-%, vorzugsweise aus 35 bis 80 Gew.-% an Carbonatstruktureinheiten der Formel (IIb), (IIc) und (IId) bestehen

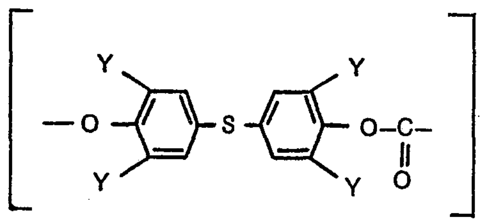

(IId)

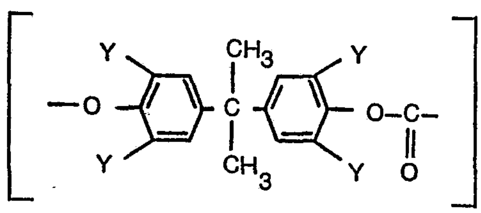

(IIb)

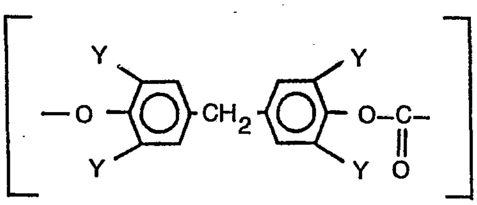

(IIc),

worin

Y H, Cl, Br oder $CH_3$ ist, und aus 70 bis 5 Gew.-%, vorzugsweise 65 bis 20 Gew.-%, an aliphatischen Carbonatstruktureinheiten der Formel (V) bestehen.

Die erfindungsgemäßen hochmolekularen aliphatisch-aromatischen Polycarbonat-Elastomere sollen mittlere Molekulargewichte $\overline{M}w$ (Gewichtsmittel) von 25 000 bis 200 000, vorzugsweise von 40 000 bis 150 000 haben, ermittelt nach der Lichtstreumethode mit dem Streulichtphotometer. Die relativen Lösungsviskositäten $\eta$ rel. (gemessen an Lösungen von 0,5 g in 100 ml $CH_2Cl_2$ bei 25°C) der erfindungsgemäßen hochmolekularen aliphatisch-aromatischen Polycarbonate liegen zwischen 1,3 und 3,0, vorzugsweise zwischen 1,4 und 2,6.

Die nach dem erfindungsgemäßen Verfahren hergestellten hochmolekularen, segmentierten, thermoplastisch verarbeitbaren hochmolekularen aliphatisch-aromatischen Polycarbonat-Elastomere liegen je nach Aufarbeitungsbedingungen einphasig oder mehrphasig vor. Weitere Erläuterungen dazu werden in DOS 2 636 783 und DOS 2 636 784 beschrieben.

Die UV-Stabilität und Hydrolysestabilität der erfindungsgemäßen hochmolekularen aliphatisch-aromatischen Polycarbonate kann verbessert werden durch für aliphatische und aromatische Polycarbonate übliche Mengen an UV-Stabilizierungsmitteln wie beispielsweise substituierte "Benzophenone" oder "Bentriazole", durch Hydrolyseschutzmittel, wie beispielsweise Mono- und vor allen Polycarbodiimide, (vgl. W. Neumann, J. Peter, J. Holtschmidt und W. Kallert, Proceedings of the 4th Rubber Technology Conference, London, 22.-25. Mai 1962, S. 738—751) in Mengen von 0,2—5 Gew.-%, bezogen auf das Gewicht der hochmolekularen aliphatisch-aromatischen Polycarbonate.

Zur Modifizierung der erfindungsgemäßen Produkte können Substanzen wie beispielsweise Ruß, Kieselgur, Kaolin, Tone, $CaF_2$, $CaCO_3$, Aluminiumoxide sowie übliche Glasfasern in Mengen von 2 bis 40 Gew.-%, bezogen jeweils auf das Gesamtgewicht der Formmasse und anorganische Pigmente sowohl als Füllstoffe als auch als Nucleierungsmittel zugesetzt werden.

Werden flammwidrige Produkte gewünscht, können ca. 5 bis 15 Gew.-%, bezogen jeweils auf das Gewicht der hochmolekularen aliphatisch-aromatischen Polycarbonat-Elastomere, in der Chemie der thermoplastischen Polyester und thermoplastischen Polycarbonate bekannten Flammschutzmittel, wie z.B. Antimontrioxid, Tetrabromphthalsäurenhydrid, Hexabromcyclododecan, Tetrachlor- oder Tetrabrombisphenol-A oder Tris-(2,3-dichlorpropyl)-phosphat zugemischt werden, wobei in den Polycarbonatanteilen der erfindungsgemäßen Polycarbonate statistisch eingebaute Tetrachlor- und Tetrabrombisphenole ebenfalls flammwidrige Eigenschaften zeigen.

Weiterhin können in der Chemie der thermoplastischen Polyester und thermoplastischen Polycarbonate bekannte Verarbeitungshilfsmittel, wie Trennhilfsmittel, in wirksamer Weise verwendet werden.

Die nach dem erfindungsgemäßen Verfahren erhaltenen hochmolekularen aliphatisch-aromatischen Polycarbonat-Elastomere können mit Vorteil überall dort angewendet werden, wo eine Kombination von Härte und Elastizität, insbesondere von Kälteflexibilität erwünscht ist, z.B. im Karosseriebau, für die Herstellung von Niederdruckreifen für Fahrzeuge, für Ummantelungen von Schläuchen, Platten, Rohren und für flexible Antriebsscheiben.

Die in nachfolgenden Beispielen aufgeführten mittleren Molekulargewichte sind Zahlenmittel $\overline{M}n$ und durch bestimmung der OH-Zahl ermittelt.

Die Bestimmung der OH-Zahl der aliphatisch-aromatischen Polycarbonate mit Diphenolcarbonat-Endgruppen erfolgt durch Acylierung mit Acetanhydrid in Pyridin und Rücktitration der entstandenen Essigsäure und des Anhydridüberschusses mit NaOH.

Dabei werden sowohl aliphatische als auch phenolische Hydroxylgruppen erfaßt. Verwendet man anstelle von Acetanhydrid Phthalsäureanhydrid, so werden unter den Analysebedingungen nur aliphatische Hydroxylgruppen acyliert. Die Differenz bei den Analysen ergibt den Gehalt an phenolischen OH-Gruppen.

Die relative Lösungsviskosität $\eta$ rel der Beispiele $B_1$—$B_8$ ist definiert durch die Viskosität von 0,5 g des hochmolekularen aliphatisch-aromatischen Polycarbonat-Elastomers in 100 ml Methylenchlorid oder Phenol/o-Dichlorbenzol = 1:1 bei 25°C.

Die Reißfestigkeit und die Reißdehnung wurde nach DIN 53 455 gemessen.

Gelchromatographische Untersuchungen wurden im Tetrahydrofuran mit Styragelsäulen (Trennbereich $1,5 \times 10^5$ Å. $1 \times 10^5$ Å $3 - 10^4$ Å und $2 \times 10^3$ Å) bei Raumtemperatur durchgeführt.

Zur Bestimmung diente die Eichung von Bisphenol A-Polycarbonat. Es wurden keine großen Abweichungen im Vergleich zu $\overline{M}w$-Bestimmung nach der Lichtstreumethode festgestellt.

## Beispiel A1

Herstellung eines Hexandiolpolycarbonats ($\overline{M}n$ 2750) mit Diphenolcarbonat-Endgruppen des 2,2-Bis-(4-hydroxyphenyl)-propans (Bisphenol A)

1,5-molarer Ansatz

Ein 10 l Dreihalskolben, ausgestattet mit Rührer, Kontaktthermometer, Füllkörperkolonne (8 cm Durchmesser, 80 cm Höhe) auf 45°C beheizter Destillationsbrücke und 6 l Vorlage wird mit 2478 g (21 Mol) 1,6-Hexandiol, 1026 g (4,5 Mol) 2,2-Bis-(4-hydroxyphenyl)-propan und 5136 g (24 Mol) Diphenylcarbonat beschickt. Nachdem das Gemisch bei 100°C aufgeschmolzen ist, werden 2 ml einer 40%igen Natronlauge (1 g NaOH) eingerührt. Nun wird ein Vakuum von 20 mbar angelegt und die Temperatur im Verlauf von 8 Stunden auf 150°C gesteigert. Dabei destillieren 4320 g (95,7% d.Th.) reines Phenol ab. Weitere 167 g (3,7% d.Th.) Phenol können innerhalb 30 Minuten bei 0,4 mbar abdestilliert werden. Der Ansatz wird auf 120°C abgekühlt und mit 5 ml 20%iger Salzsäure neutralisiert. Anschließend wird noch 1 Stunde lang auf 190°C bei 0,4 mbar erhitzt, wobei sich die Gesamtmenge des abdestillierten Phenols auf 4509 g (99,9% d.Th.) erhöht. Es bleibt ein gelbliches zähflüssiges Harz zurück, das unterhalb 40° wachsartig erstarrt. Die OH-Zahl-Bestimmung ergibt nach der Acetanhydridmethode 40,6 (berechnet: 40,7) und nach der Phthalsäureanhydridmethode 0,8. Eine Bestimmung der phenolischen OH-Gruppen nach der $TiCl_4$-Methode ergibt 1,25 Gew.-% (berechnet 1,23%).

Beispiel A2

Herstellung eines Hexandiolpolycarbonats ($\overline{M}n$ 4100) mit Diphenolcarbonat-Endgruppen des 2,2-Bis-(4-hydroxyphenyl)-propans (Bisphenol A)

1 molarer Ansatz

Wie in Beispiel A1 werden 2950 g (25 Mol) 1,6-Hexandiol und 456 g (2 Mol) 2,2-Bis-(4-hydroxyphenyl)-propan unter Verwendung von 50 mg NaOH gemeinsam mit 5564 g (26 Mol) Diphenylcarbonat kondensiert. Dabei wird zunächst bei 20 mbar die Temperatur von 110°C auf 150°C gesteigert. Nach einer weiteren Stunde bei 150°C und 0,93 mbar wird der Katalysator mit 20%iger HCl (Überschuß) neutralisiert und anschließend geringe Restmengen an Phenol bei 200°C abdestilliert.

Man erhält ein zähes Wachs mit einer Erweichungstemperatur von 45° und einer OH-Zahl (Acetanhydridmethode) von 27,5 (berechnet 27,4).

Beispiel A3*

Herstellungen eines Triäthylenglykolpolycarbonats ($\overline{M}n$ 2900) mit Diphenol-carbonat-Endgruppen des 2,2-Bis-(4-hydroxyphenyl)-propans

1,5-molarer Ansatz

In der gleichen Apparatur werden 2700 g (18 Mol) Triäthylenglykol und 1026 g (4,5 Mol) 2,2-Bis-(4-hydroxyphenyl)-propan gemeinsam mit 4494 g (21 Mol) Diphenylcarbonat ohne Katalysator kondensiert. Dabei wird innerhalb 8 Stunden bei 15 Torr die Temperatur von 100°C anfangend auf 200°C gesteigert. Anschließend wird bei 0,66 mbar zunächst 1 Stunde bei 200°C und dann noch eine weitere Stunde bei 220°C weiter kondensiert. Danach ist die Bildung von Phenol abgeschlossen. Es werden insgesamt in der Vorlage 3950 g (berechnet 3948 g) Phenol gesammelt.

Man erhält hellgelbes zähflüssiges Produkt mit der OH-Zahl 36.9 (berechnet: 39,3) nach der Acetanhydridmethode.

Die Phthalsäureanhydridmethode ergibt eine OH-Zahl von 0,3.

In den Beispielen der folgenden Tabelle I sind verschiedene Diphenole und Katalysatoren eingesetz worden.

Kondensation bei 125°C/16 mbar beginnend bis 200°C/0,66 mbar, zusammen 12 Stunden Laufzeit.

(*Beispiel A3 nur für NL)

TABELLE I

| Beispiel | Mol Hexandiol | Mol | Diphenol | Mol Diphenyl-carbonat | ppm | Katalysator | OH-Zahl |
|---|---|---|---|---|---|---|---|
| A4 | 14 | 2 | 2,2-Bis-(3,5-dimethyl-4-hydroxyphenyl)-propan | 15 | 50 | Dibutyl-zinndilaurat | 42,5 |
| A5 | 14 | 2 | Bis-(3,5-dimethyl-4-hydroxyphenyl)-methan | 15 | 50 | " | 43,5 |
| A6 | 14 | 3 | 4,4'-Dihydroxydiphenyl-sulfid | 16 | 10 | Mg $CO_3$ | 40,8 |
| A7 | 14 | 3 | 1,1-Bis-(4-hydroxyphenyl)-cyclohexan | 15 | 10 | Kaliumphenolat | 78,2 |
| A8 | 14 | 3 | 4,4'-Dihydroxydiphenyl | 16 | 20 | Titansäuretetra-butylester | 42,9 |

Beispiel B1

Herstellung eines hochmolekularen, segmentierten aliphatisch-aromatischen Polycarbonats aus 55 Gew.-% Hexandiol-1,6-Polycarbonat und 45 Gew.-% Bisphenol A-Polycarbonat

3414 g des Vorprodukts aus Beispiel A1, gelöst in 35 Liter $CH_2Cl_2$, werden zu einer Lösung von 879 g (3,85 Mol) Bisphenol A, 1415 g 45 proz. NaOH und 30 Liter dest. Wasser gegeben.

Dazu wird eine Lösung aus 16,09 g 1,4-Bis-(4,4''-dihydroxytriphenylmethyl)-benzol und 145 g 5 proz. NaOH gegeben. Innerhalb 35 Minuten werden bei 20—25°C unter Rühren und Stickstoffatmosphäre 1181 g (11,95 Mol) Phosgen eingeleitet. Während des Einleitens werden gleichzeitig 2070 g 45 proz. NaOH so zugetropft, daß der pH-Wert konstant bei pH 13 bleibt. Nach dem Phosgeneinleiten werden 8,05 g Triäthylamin zugegeben und 1 Stunde gerührt. Die organische Phase wird abgetrennt, nacheinander mit 2-prozentiger Phosphorsäure und schließlich mit dest. Wasser bis zur Electrolytfreiheit gewaschen. Nach dem Abtrennen des Wassers wird die organische Lösung konzentriert. Die Isolierung des hochmolekularen aliphatisch-aromatischen Polycarbonats erfolgt durch Extrusion im Eindampfextruder bei etwa 200—220°C unter den für die Polycarbonatextrusion bekannten Bedingungen.

Die rel. Viskosität des erhaltenen aliphatisch-aromatischen Polycarbonats begrägt $\eta_{rel} = 1,82$ (gemessen in $CH_2Cl_2$ bei 25°C und (5 g/l).

Nach gelchromatographischer Bestimmung zeigt das Polycarbonat-Elastomer eine bimodale Verteilungsfunktion mit einem hochmolekularen Nebenmaximum bei einem Molekulargewicht von ca. 300 000 und einem Hauptmaximum bei einem Molekulargewicht von ca. 52 000. Einige mechanische Eigenschaften einer Folie sind:

Reißfestigkeit: 23,4 MPa
Reißdehnung: 260%

Beispiel B2

Herstellung eines hochmolekularen, segmentierten, aliphatisch-aromatischen Polycarbonats aus 55 Gew.-% Hexandiol-1,6-Polycarbonat und 45 Gew.-% Bisphenol A-Polycarbonat

2789 g des Vorprodukts aus Beispiel A2, gelöst in 35 Liter $CH_2Cl_2$, werden zu einer Lösung von 1504,5 g (6,59 Mol) Bisphenol A, 1415 g 45 proz. NaOH und 30 Liter dest. Wasser gegeben.

Dazu wird eine Lösung aus 16,09 g 1,4-Bis-(4',4''-dihydroxytriphenyl-methyl)-benzol und 145 g 5 proz. NaOH gegeben. Innerhalb 35 Minuten werden bei 20—25°C unter Rühren und Stickstoffatmosphäre 1181 g (11,45 Mol) Phosgen eingeleitet. Während des Einleitens werden gleichzeitig 2070 g 45 proz. NaOH so zugetropft, daß der pH-Wert konstant bei pH 13 bleibt. Nach dem Phosgeneinleiten werden 8,05 g Triäthylamin zugegeben und 1 Stunde gerührt. Anschließend wird wie im Beispiel B1 aufgearbeitet.

Die relative Viskosität des erhaltenen hochmolekularen Polycarbonat-Elastomers beträgt $\eta_{rel} = 1,82$ (in $CH_2Cl_2$). Nach gelchromatographischer Bestimmung zeigt das Polymer eine bimodale Verteilungsfunktion mit einem hochmolekularen Nebenmaximum bei einem Molekulargewicht von ca. 280000 und einem Hauptmaximum bei einem Molekulargewicht von ca. 54000. Einige mechanische Eigenschaften einer Folie sind:

Reißfestigkeit: 29,3 (MPa)
Reißdehnung: 260%

Beispiel B3*

Herstellung eines hochmolekularen, segmentierten aliphatisch-aromatischen Polycarbonats aus 50 Gew.-% Triäthylenglykol-polycarbonat und 50 gew.-% Bisphenol A-Polycarbonat

132,4 g des Vorprodukts aus Beispiel A3, gelöst in 1725 g Methylenchlorid werden zu einer Lösung von 57,4 g 2,2-Bis-(4-hydroxyphenyl)-propan (Bisphenol A), 1300 g dest. Wasser und 70 g 45 proz. NaOH gegeben. Innerhalb 30 Minuten werden 58,3 g Phosgen unter Rühren und Stickstoffatmosphäre eingeleitet, während gleichzeitig 140 g 45 proz. Natronlauge zur Konstanthaltung von pH 13 zugetropft werden. Nach dem Phosgeneinleiten werden 39,8 g einer 1-proz. Triäthylaminlösung zugegeben und 1 Stunde gerührt. Die organische Phase wird abgetrennt, nacheinander mit 2 proz. Phosphorsäure und schließlich mit dest. Wasser bis zur Elektrolytfreiheit gewaschen. Nach dem Abtrennen des Wasser wird das Lösungsmittel abdestilliert und das hochmolekulare Polycarbonat-Elastomer im Vakuumtrockenschrank bei 80—100°C und 15 Torr getrocknet.

Die rel. Viskosität des Polycarbonat-Elastomers beträgt $\eta rel = 2,58$ (in $CH_2Cl_2$).

Nach gelchromatographischer Bestimmung zeigt das Polymer ein Maximum bei 130 000.

Einige mechn. Eigenschaften einer aus Methylenchlorid gegossenen Folie sind:

Reißfestigkeit: 41,4 MPa
Reißdehnung: 358%

---

(*Beispiel B3 nur für NL)

Beispiel B4

Herstellung eines hochmolekularen, aliphatisch-aromatischen Polycarbonats aus 60 Gew.-% Hexandiol-1,6-Polycarbonat und 40 Gew.-% 2,2-Bis-(3,5-dimethyl-4-hydroxyphenyl)-propan-Polycarbonat.

170,8 g des Vorprodukts aus Beispiel A4 (Tabelle 1) und 0,48 g Tributylamin (= 1 Mol-% pro Mol Bisphenoleinheiten), gelöst in 1725 g Methylenchlorid, werden zu einer Lösung von 22,5 g 2,2-Bis-(3,5-dimethyl-4-hydroxyphenyl)-propan in 46 g 45 proz. NaOH und 1300 g dest. Wasser gegeben.

Dazu wird eine Lösung aus 0,49 g 1,4-Bis-(4',4''-dihydroxytriphenyl-methyl)-benzol und 4,5 g 5 proz. NaOH gegeben. Innerhalb 30 Minuten werden unter Rühren und Stickstoffatmosphäre 76,5 g Phosgen eingeleitet, während gleichzeitig 148 g 45 proz. NaOH zur Konstanthaltung von pH 13 zugetropft werden. Nach dem Phosgeneinleiten werden zur vollständigen Kondensation 4,29 g Tributylamin (= 9 Mol-% pro Mol Bisphenoleinheiten) zugegeben. Der Ansatz wird zähflüssiger. Nach 3 Stunden trennt man die organische Phase ab und gewinnt das Polycarbonat-Elastomer wie in Beispiel B3 beschrieben.

Die rel. Viskosität des Polycarbonat-Elastomers beträgt $\eta rel = 1,80$ (in $CH_2Cl_2$).

Beispiel B5

Herstellung eines hochmolekularen, aliphatisch-aromatischen Polycarbonats aus 60 Gew.-% Hexandiol-1,6-Polycarbonat und 40 Gew.% Bis-(2,5-dimethyl-4-hydroxyphenyl)-methan-Polycarbonat.

Wie in Beispiel B4 wird das Ausgangsprodukt aus Beispiel A5 (Tabelle 1) mit Bis-(3,5-dimethyl-4-hydroxyphenyl)-methan und Phosgen umgesetzt.

Die rel. Viskosität des Polycarbonat-Elastomers beträgt $\eta rel = 1,78$ (in $CH_2Cl_2$).

Beispiel B6

Herstellung eines hochmolekularen aliphatisch-aromatischen Polycarbonats aus 50 Gew.-% Hexandiol-1,6-Polycarbonat und 50 Gew.-% 4,4'-Dihydroxydiphenyl-sulfid-Polycarbonat.

132,5 g des Vorprodukts aus Beispiel A6 (Tabelle 1), gelöst in 1725 g Methylenchlorid werden zu einer Lösung von 56,75 g 4,4'-Dihydroxydiphenyl-sulfid 73 g 45 proz. NaOH und 1300 g dest. Wasser gegeben. Dazu wird eine Lösung aus 0,78 g 1,4-Bis-(4,4''-dihydroxytriphenyl-methyl)-benzol und 7 g 5 proz. NaOH gegeben. Innerhalb 30 Minuten werden 60,33 g Phosgen unter Rühren und Stickstoffatmosphäre eingeleitet, während gleichzeitig 130 g 45 proz. NaOH unter Konstanthaltung von pH 13 zugetropft werden. Nach dem Phosgeneinleiten werden 41,4 g einer 1 proz. Triäthylaminlösung zugegeben und wie in Beispiel B3 beschrieben, aufgearbeitet.

Die rel. Viskosität des Polycarbonat-Elastomers beträgt $\eta rel = 2,04$ (0,5 g in 100 ml Phenol/o-Dichlorbenzol = 1:1).

Beispiel B7

Herstellung eines hochmolekularen, segmentierten aliphatisch-aromatischen Polycarbonats aus 60 Gew.-% Hexandiol-1,6-Polycarbonat und 40 Gew.-% 1,1-Bis-(4-hydroxyphenyl)-cyclohexan-Polycarbonat.

167,9 g des Vorprodukts aus Beispiel A7 (Tabelle 1) gelöst in 1725 g Methylenchlorid, werden zu einer Lösung von 24,9 g 1,1-Bis-(4-hydroxyphenyl)-cyclohexan, 0,41 g p-tert.-Butylphenol, 1300 g dest. Wasser und 48,4 g 45 proz. NaOH gegeben. Dazu wird eine Lösung von 0,7 g 1,4-Bis-(4,4'-dihydroxytriphenylmethyl)-benzol und 6,2 g 5 proz. NaOH gegeben. Innerhalb 30 Minuten werden 40,4 g Phosgen unter Rühren und Stickstoffatmosphäre eingeleitet, während gleichzeitig 55 g 45 proz. Natronlauge zur Konstanthaltung von pH 13 zugetropft werden. Nach dem Phosgeneinleiten werden 27,5 g einer 1 proz. Triäthylaminlösung zugegeben und wie in Beispiel B3 beschrieben, aufgearbeitet.

Die rel. Viskosität des Polycarbonat-Elastomers beträgt $\eta rel. = 2,25$ (in $CH_2Cl_2$).

Beispiel B8

Herstellung eines hochmolekularen aliphatisch-aromatischen Polycarbonats aus 55 Gew.-% Hexandiol-1,6-Polycarbonat und 45 Gew.-% eines Polycarbonats aus Bisphenol A und 4,4'-Dihydroxydiphenyl im Molverhältnis 1:1

124 g des viskosen Öls aus Beispiel A2, gelöst in 1725 g Methylenchlorid werden zu einer Lösung aus 30,14 g Bisphenol A, 35,9 g 4,4'-Dihydroxydiphenyl, 1300 g dest. Wasser und 68,5 g 45 proz. NaOH gegeben. Dazu wird eine Lösung aus 0,78 g 1,4-Bis-(4,4''-dihydroxytriphenylmethyl)-benzol und 6,5 g 5 proz. NaOH gegeben. Innerhalb 30 Minuten werden 76,3 g Phosgen, unter Rühren und Stickstoffatmosphäre eingeleitet, während gleichzeitig 180 g 45 proz. NaOH zugetropft werden. Nach dem Phosgeneinleiten werden 39,1 g einer 1 proz. Triäthylaminlösung zugegeben und wie im Beispiel 3 aufgearbeitet.

Die rel. Viskosität des Polycarbonat-Elastomers beträgt $\eta rel = 1,76$ (in Phenol/o-Dichlorbenzol = 1:1).

## Patentansprüche für die Vertragsstaaten: DE FR GB IT

1. Verfahren zur Herstellung von aliphatisch-aromatischen Polycarbonaten mit Diphenol-carbonat-Endgruppen, dadurch gekennzeichnet, daß aliphatische Diole, deren OH-Gruppen zueinander mindestens $\alpha,\gamma$-ständig oder weiter voneinander entfernt sind, Kohlensäurebisarylester und Diphenole gemeinsam, gegebenenfalls unter Mitverwendung von Katalysatoren, bei Temperaturen zwischen 80 und 270°C und im Vakuum zwischen 266 mbar und 0,133 mbar umgesetzt werden, wobei zur Herstellung von 1 Mol des aliphatisch-, aromatischen Polycarbonats n Mol aliphatische Diol, m Mol Diphenol und p Mol Kohlensäurebisarylester eingesetzt werden, wobei n eine Zahl von 2 bis 40 und jeweils so gewählt ist, daß das Produkt aus n und dem um 26 vergrößerten Molekulargewicht $\overline{M}n$ (Zahlenmittel) des eingesetzten Diols eine Zahl zwischen 300 und 10 000 ist, und wobei m eine beliebige Zahl zwischen 2 und 5 und p mindestens n + 1, höchstens aber (n + m) — 1 ist.

2. Aliphatische-aromatische Polycarbonate mit Diphenol-carbonat-Endgruppen der idealisierten Formel (I)

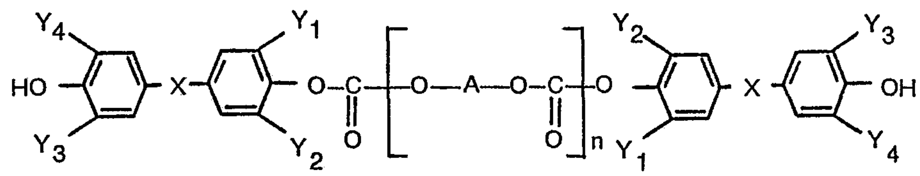

worin

A der bivalente Rest eines aliphatischen Diols ausgewählt aus 1,3-Propandiol, 1,4-Butandiol, 1,5-Pentandiol, 3-Methylpentandiol-1,5, Trimethylhexandiol-1,6, 1,6-Hexandiol, 1,12-Dodecandiol, 1,12-Octadecandiol, Diethylenglykol, Dipropylenglykol, Neopentylglykol und prepolymeren aliphatischen Polycarbonatdiolen, die aus Glykolen wie Diethylenglykol, Hexandiol-(1,6), Butandiol-1,4, Dodecandiol-(1,12), durch Umesterung mit Diethylcarbonat oder Diphenylcarbonat bzw. durch Umsetzung mit Phosgen nach bekannten Verfahren hergestellt werden, sofern sie bezüglich ihrer OH-Gruppen den in Anspruch 1 geforderten Bedingungen genügen und ein Molekulargewicht $\overline{M}n$ (Zahlenmittel) von 300 bis 3000 haben, ist

X eine Einfachbindung,

$-CH_2$, 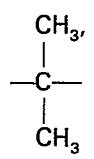 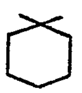, O, S, $SO_2$ oder 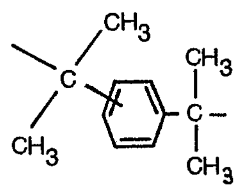 ist,

$Y_1$ bis $Y_4$ gleich oder verschieden sind und Wasserstoff, $C_1$—$C_4$-Alkyl oder Halogen und
n eine ganze Zahl von 2—40 bedeuten, erhalten gemäß Verfahren des Anspruchs 1.

3. Verfahren zur Herstellung von hochmolekularen aliphatisch-aromatischen Polycarbonat-Elastomeren nach dem Zweiphasengrenzflächenverfahren, dadurch gekennzeichnet, daß man die aliphatisch-aromatischen Polycarbonate mit Diphenol-carbonat-Endgruppen des Anspruchs 2, mit anderen Diphenolen und mit Phosgen in einem Flüssigkeitsgemisch aus inerten organischen Lösungsmittel und alkalischer wäßriger Lösung bei Temperaturen zwischen 0°C und 80°C bei einem pH-Wert zwischen 9 und 14 umsetzt, und nach der Phosgenzugabe durch Zusatz von 0,2 Mol-% bis zu 10 Mol-% an tertiärem aliphatischem Amin, bezogen auf Molmenge an Diphenol, polykondensiert, wobei das Gewichtsverhältnis von aliphatisch-aromatischen Polycarbonat mit Diphenolcarbonat-Endgruppen zu anderem Diphenol von dem gewünschten, aromatischen Polycarbonatanteil und dem aliphatischen Polycarbonatanteil der hochmolekularen aliphatisch-aromatischen Polycarbonate bestimmt wird.

4. Verfahren gemäß Anspruch 3, dadurch gekennzeichnet, daß als andere Diphenole solche der Formel (II)

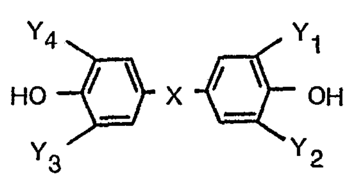 (II)

umgesetzt werden, worin

X eine Einfachbindung,

$-CH_2-$, 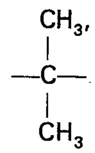 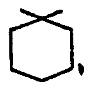, $SO_2$, O, S oder 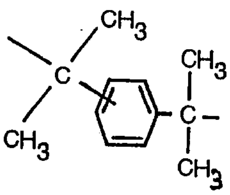 und

$Y_1$ bis $Y_4$ gleich oder verschieden sind und Wasserstoff, $C_1$—$C_4$-Alkyl oder Halogen bedeuten.

**Patentansprüche für den Vertragsstaat: NL**

1. Verfahren zur Herstellung von aliphatisch-aromatischen Polycarbonaten mit Diphenol-carbonat-Endgruppen, dadurch gekennzeichnet, daß aliphatische Diole, deren OH-Gruppen zueinander mindestens $\alpha,\gamma$-ständig oder weiter voneinander entfernt sind, Kohlensäurebisarylester und Diphenole gemeinsam, gegebenenfalls unter Mitverwendung von Katalysatoren, bei Temperaturen zwischen 80 und 270°C und im Vakuum zwischen 266 mbar und 0,133 mbar umgesetzt werden, wobei zur Herstellung von 1 Mol des aliphatisch-, aromatischen Polycarbonats n Mol aliphatisches Diol, m Mol Diphenol und p Mol Kohlensäurebisarylester eingesetzt werden, wobei n eine Zahl von 2 bis 40 und jeweils so gewählt ist, daß das Produkt aus n und dem um 26 vergrößerten Molekulargewicht $\overline{M}n$ (Zahlenmittel) des eingesetzten Diols eine Zahl zwischen 300 und 10 000 ist, und wobei m eine beliebige Zahl zwischen 2 und 5 und p mindestens $n + 1$, höchstens aber $(n + m) - 1$ ist.

2. Aliphatische-aromatische Polycarbonate mit Diphenol-carbonat-Endgruppen erhältlich gemäß Verfahren des Anspruchs 1.

3. Aliphatische-aromatische Polycarbonate mit Diphenol-carbonat-Endgruppen der idealisierten Formel (I)

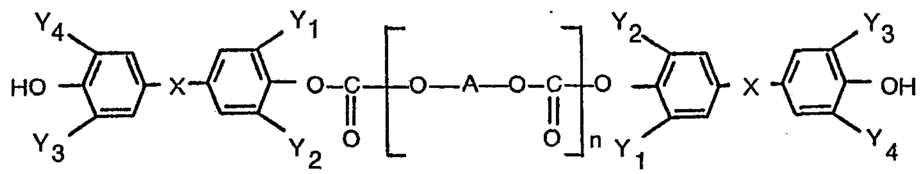

worin
A der bivalente Rest eines aliphatischen Diols ist,
X eine Einfachbindung,

$-CH_2$, 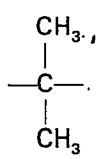 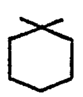 O, S, $SO_2$ oder 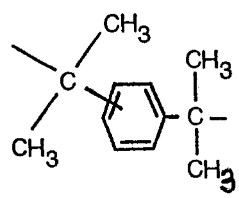 ist,

$Y_1$ bis $Y_4$ gleich oder verschieden sind und Wasserstoff, $C_1$—$C_4$-Alkyl oder Halogen und n eine ganze Zahl von 2—40 bedeuten, erhalten gemäß Verfahren des Anspruchs 1.

4. Verfahren zur Herstellung von hochmolekularen aliphatisch-aromatischen Polycarbonat-Elastomeren nach dem Zweiphasengrenzflächenverfahren, dadurch gekennzeichnet, daß man die aliphatisch-aromatischen Polycarbonate mit Diphenol-carbonat-Endgruppen des Ansprüche 2 und 3, mit anderen Diphenolen und mit Phosgen in einem Flüssigkeitsgemisch aus inerten organischen Lösungsmittel und alkalischer wäßriger Lösung bei Temperaturen zwischen 0°C und 80°C bei einem pH-Wert zwischen 9 und 14 umsetzt, und nach der Phosgenzugabe durch Zusatz von 0,2 Mol-% bis zu 10 Mol-% an tertiärem aliphatischem Amin, bezogen auf Molmenge an Diphenol, polykondensiert, wobei das Gewichtsverhältnis von aliphatisch-aromatischen Polycarbonat mit Diphenol-carbonat-Endgruppen zu anderem Diphenol von dem gewünschten, aromatischen Polycarbonatanteil und dem aliphatischen Polycarbonatanteil der hochmolekularen aliphatisch-aromatischen Polycarbonate bestimmt wird.

5. Verfahren gemäß Anspruch 4, dadurch gekennzeichnet, daß als andere Diphenole solche der Formel (II)

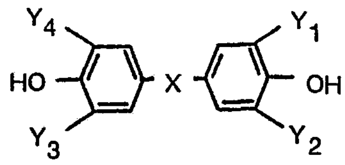

(II)

umgesetzt werden, worin
X eine Einfachbindung,

$-CH_2-$, 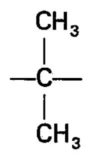, 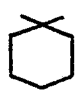 $SO_2$, O, S oder 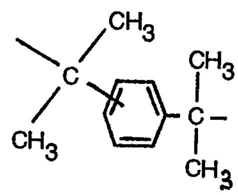 und

$Y_1$ bis $Y_4$ gleich oder verschieden sind und Wasserstoff, $C_1$—$C_4$-Alkyl oder Halogen bedeuten.

**Claims for the Contracting States: DE FR GB IT**

1. Process for the preparation of aliphatic-aromatic polycarbonates with diphenol carbonate end groups, characterised in that aliphatic diols, the OH groups of which are in at least the $\alpha$-position and $\gamma$-position relative to one another or further removed from one another, carbonic acid bis-aryl esters and diphenols are conjointly reacted, if appropriate also using catalysts, at temperatures between 80 and 270°C and in vacuo between 266 mbars and 0.133 mbars, n mols of aliphatic diol, m mols of diphenol and p mols of carbonic acid bis-aryl ester being employed for the preparation of 1 mol of the aliphatic-aromatic polycarbonate, n being a number of from 2 to 40 and being chosen in each case so that the product of n and of the molecular weight $\overline{M}n$ (number average), increased by 26, of the diol employed is a number between 300 and 10,000, and m being any desired number between 2 and 5 and p being at least n + 1, but at most (n + m) − 1.

2. Aliphatic-aromatic polycarbonates, with diphenol carbonate end groups, of the ideal formula (I)

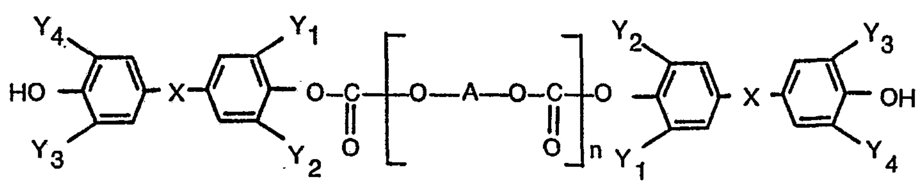

wherein

A is the bivalent radical of an aliphatic diol selected from 1,3-propanediol, 1,4-butanediol, 1,5-pentanediol, 3-methyl-1,5-pentanediol, trimethyl-1,6-hexanediol, 1,6-hexanediol, 1,12-dodecanediol, 1,12-octadecanediol, diethylene glycol, dipropylene glycol, neopentyl glycol and prepolymeric aliphatic polycarbonate diols which are prepared from glycols such as diethylene glycol, 1,6-hexanediol, 1,4-butanediol or 1,12-dodecanediol, by trans-esterification with diethyl carbonate or diphenyl carbonate or by reaction with phosgene in accordance with known processes, as long as they fulfil the conditions laid down in Claim 1 and have a molecular weight $\overline{M}n$ (number average) of 300 to 3,000,

X is a single bond,

$-CH_2-$, 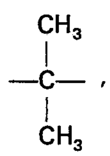, 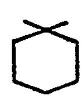, O, S, $SO_2$ or 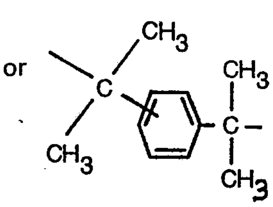 and

$Y_1$ to $Y_4$ are identical or different and denote hydrogen, $C_1$—$C_4$-alkyl or halogen and
n denotes an integer from 2—40,
obtained according to the process of Claim 1.

3. Process for the preparation of high-molecular aliphatic-aromatic polycarbonate elastomers

according to the two-phase boundary process, characterised in that the aliphatic-aromatic polycarbonates, with diphenol carbonate end groups, of Claim 2 are reacted with other diphenols and with phosgene in a liquid mixture of inert organic solvent and alkaline aqueous solution at temperatures between 0°C and 80°C at a pH value between 9 and 14, and, after the addition of phosgene, the products are subjected to polycondensation reactions by adding 0.2 mol% to 10 mol% of a tertiary aliphatic amine, relative to the molar amount of diphenol, the weight ratio of aliphatic-aromatic polycarbonate with diphenol carbonate end groups to the other diphenol being determined by the desired proportion of aromatic polycarbonate and the proportion of aliphatic polycarbonate in the high-molecular aliphatic-aromatic polycarbonates.

4. Process according to Claim 3, characterised in that diphenols of the formula (II)

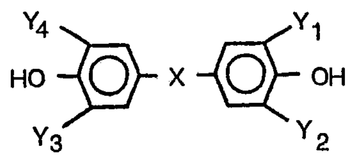

(II)

wherein

X a single bond,

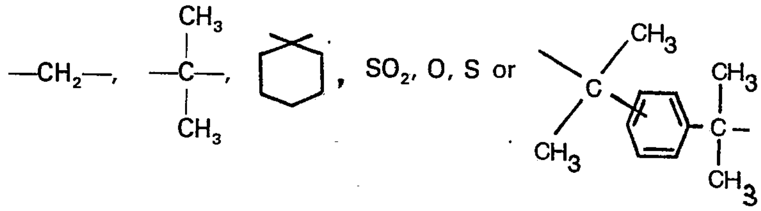

$—CH_2—$, , $SO_2$, O, S or and

$Y_1$ to $Y_4$ are identical or different and denote hydrogen, $C_1—C_4$-alkyl or halogen, are reacted as the other diphenols.

**Claims for the Contracting State: NL**

1. Process for the preparation of aliphatic-aromatic polycarbonates with diphenol carbonate end groups, characterised in that aliphatic diols, the OH groups of which are in at least the $\alpha$-position and $\gamma$-position relative to one another or further removed from one another, carbonic acid bis-aryl esters and diphenols are conjointly reacted, if appropriate also using catalysts, at temperatures between 80 and 270°C and in vacuo between 266 mbars and 0.133 mbars, n mols of aliphatic diol, m mols of diphenol and p mols of carbonic acid bis-aryl ester being employed for the preparation of 1 mol of the aliphatic-aromatic polycarbonate, n being a number of from 2 to 40 and being chosen in each case so that the product of n and of the molecular weight $\overline{M}n$ (number average), increased by 26, of the diol employed is a number between 300 and 10,000, and m being any desired number between 2 and 5 and p being at least n + 1, but at most (n + m) − 1.

2. Aliphatic-aromatic polycarbonates, with diphenol carbonate end groups, obtainable according to the process of Claim 1.

3. Aliphatic-aromatic polycarbonates, with diphenol carbonate end groups, of the ideal formula (I)

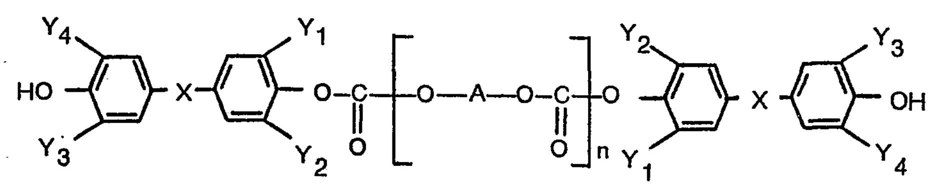

wherein

A is the bivalent radical of an aliphatic diol,

X is a single bond,

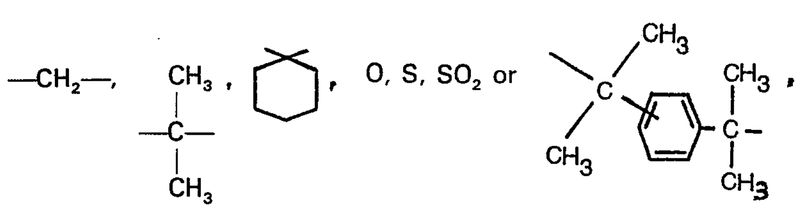

$—CH_2—$, , O, S, $SO_2$ or ,

$Y_1$ to $Y_4$ are identical or different and denote hydrogen, $C_1$—$C_4$-alkyl or halogen and
n denotes an integer from 2—40,
obtained according to the process of Claim 1.

4. Process for the preparation of high-molecular aliphatic-aromatic polycarbonate elastomers according to the two-phase boundary process, characterised in that the aliphatic-aromatic polycarbonates, with diphenol carbonate end groups, of Claims 2 and 3 are reacted with other diphenols and with phosgene in a liquid mixture of inert organic solvent and alkaline aqueous solution at temperatures between 0°C and 80°C at a pH value between 9 and 14, and, after the addition of phosgene, the products are subjected to polycondensation reactions by adding 0.2 mol% to 10 mol% of a tertiary aliphatic amine, relative to the molar amount of diphenol, the weight ratio of aliphatic-aromatic polycarbonate with diphenol carbonate end groups to the other diphenol being determined by the desired proportion of aromatic polycarbonate and the proportion of aliphatic polycarbonate in the high-molecular aliphatic-aromatic polycarbonates.

5. Process according to Claim 4, characterised in that diphenols of the formula (II)

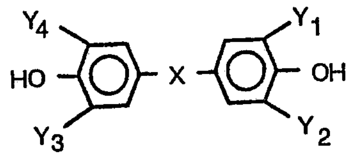

(II)

wherein
X a single bond,

—$CH_2$—, 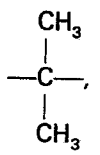, 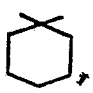, $SO_2$, O, S or 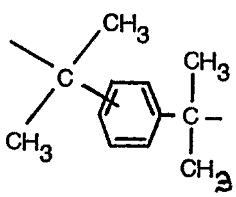 and

$Y_1$ to $Y_4$ are identical or different and denote hydrogen, $C_1$—$C_4$-alkyl or halogen,
are reacted as the other diphenols.

**Revendications pour les Etats contractants: DE FR GB IT**

1. Procédé de production de polycarbonates aliphato-aromatiques à groupes diphénol-carbonate terminaux, caractérisé en ce qu'on fait réagir ensemble des diols aliphatiques dont les groupes OH sont distants l'un de l'autre au moins en positions, ou davantage, des esters bisaryliques d'acide carbonique et des diphénols, en utilisant éventuellement des catalyseurs, à des températures comprises entre 80 et 270°C et sous un vide compris entre 266 mbars et 0,133 mbar, en utilisant pour la production d'une mole du polycarbonate aliphato-aromatique n moles de diol aliphatique, m moles de diphénol et p moles d'ester bisarylique d'acide carbonique, *n* étant un nombre de 2 à 40 et étant choisi dans chaque cas de manière que le produit de *n* par le poids moléculaire $\overline{M}n$ (moyenne en nombre), augmenté de 26, du diol utilisé soit un nombre compris entre 300 et 10 000, et *m* étant un nombre quelconque entre 2 et 5 et *p* étant égal à n + 1 au moins, mais à (n + m) — 1 au plus.

2. Polycarbonates aliphato-aromatiques porteurs des groupes diphénolcarbonate terminaux de formule théorique (I)

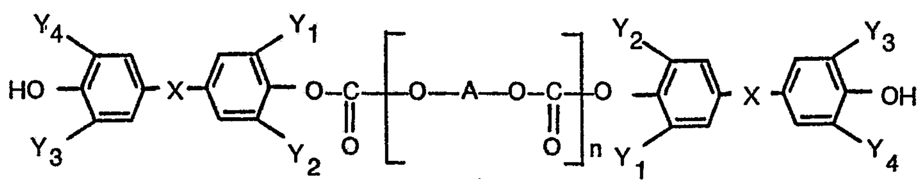

dans laquelle
A est le reste bivalent d'un diol aliphatique choisi entre le 1,3-propanediol, le 1,4-butanediol, le 1,5-pentanediol, le 3-méthylpentanediol-1,5, le triméthylhexanediol-1,6, le 1,6-hexanediol, le 1,12-dodécanediol, le 1,12-octadécanediol, le diéthylène-glycol, le dipropylène-glycol, le néopentylglycol et des polycarbonatediols aliphatiques prépolymères, qui sont préparés à partir de glycols tels que le diéthylène-glycol, l'hexanediol-(1,6), le butanediol-1,4, le dodécanediol-(1,12), par transestérification avec le carbonate de diéthyle ou le carbonate de diphényle ou par réaction avec le phosgène par

des procédés connus, dans la mesure où ils satisfont, en ce qui concerne leurs groupes OH, aux conditions posées dans la revendication 1 et ont un poids moléculaire $\overline{M}n$ (moyenne en nombre) de 300 à 3000,

X est une liaison simple,

—$CH_2$, 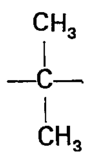 , 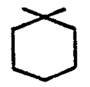 , O, S, $SO_2$ ou 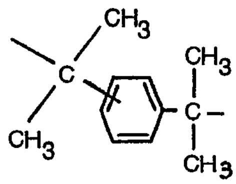

$Y_1$ à $Y_4$ sont identiques ou différents et représentent l'hydrogène, un groupe alkyle en $C_1$ à $C_4$ ou un halogène et

n est un nombre entier de 2 à 40, obtenus conformément au procédé suivant la revendication 1.

3. Procédé de production d'élastomères de polycarbonate aliphato-aromatique de haut poids moléculaire par le procédé à l'interface entre deux phases, caractérisé en ce qu'on fait réagir les polycarbonates aliphato-aromatiques à groupes diphénolcarbonate terminaux de la revendication 2 avec d'autres diphénols et avec le phosgène dans un mélange liquide de solvants organiques inertes et de solution aqueuse alcaline à des températures comprises entre 0 et 80°C, à un pH compris entre 9 et 14, et après l'addition de phosgène, on effectue la polycondensation par addition de 0,2 à 10 moles % d'amine aliphatique tertiaire, par rapport à la quantité molaire de diphénol, le rapport en poids du polycarbonate aliphato-aromatique porteur de groupes diphénolcarbonate terminaux à l'autre diphénol étant déterminé par la portion désirée de polycarbonate aromatique et la portion de polycarbonate aliphatique des polycarbonates aliphato-aromatiques de haut poids moléculaire.

4. Procédé suivant la revendication 3, caractérisé en ce qu'on fait réagir comme autres diphénols, des phénols de formule (II)

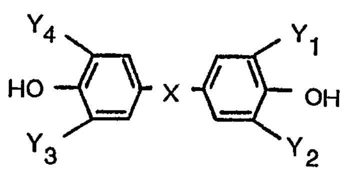

(II)

dans laquelle

X est une liaison simple,

—$CH_2$—, 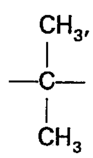 , 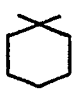 , $SO_2$, O, S ou 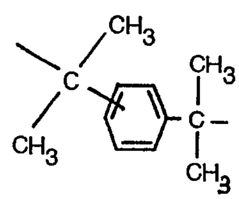 et

$Y_1$ à $Y_4$ sont identiques ou différents et représentent de l'hydrogène, un groupe alkyle en $C_1$ à $C_4$ ou un halogène.

**Revendications pour l'Etat contractant: NL**

1. Procédé de production de polycarbonates aliphato-aromatiques à groupes diphénol-carbonate terminaux, caractérisé en ce qu'on fait réagir ensemble des diols aliphatiques dont les groupes OH sont distants l'un de l'autre au moins en positions $\alpha$, $\gamma$, ou davantage, des esters bisaryliques d'acide carbonique et des diphénols, en utilisant éventuellement des catalyseurs, à des températures comprises entre 80 et 270°C et sous un vide compris entre 266 mbars et 0,133 mbar, en utilisant pour la production d'une mole du polycarbonate aliphato-aromatique n moles de diol aliphatique, m moles de diphénol et p moles d'ester bisarylique d'acide carbonique, *n* étant un nombre de 2 à 40 et étant choisi dans chaque cas de manière que le produit de *n* par le poids moléculaire Mn (moyenne en nombre), augmenté de 26, du diol utilisé soit un nombre compris entre 300 et 10 000, et *m* étant un nombre quelconque entre 2 et 5 et *p* étant égal à n + 1 au moins, mais à (n + m) — 1 au plus.

2. Polycarbonates aliphato-aromatiques portant des groupes diphénolcarbonate terminaux, pouvant être obtenus conformément au procédé de la revendication 1.

3. Polycarbonates aliphato-aromatiques porteurs des groupes diphénolcarbonate terminaux de formule théorique (I)

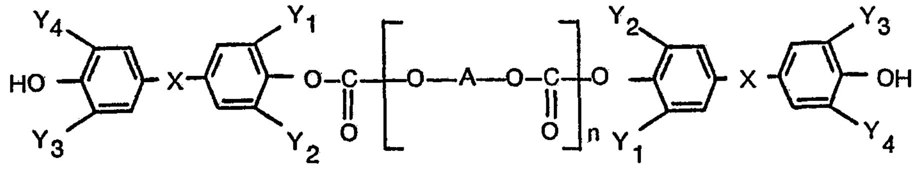

dans laquelle
A est le reste bivalent d'un diol aliphatique,
X est une liaison simple, un groupe

—$CH_2$, 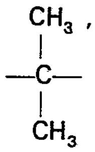 , 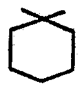 , O, S, $SO_2$ ou un groupe 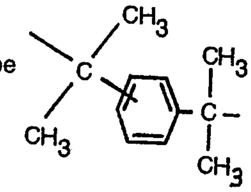

$Y_1$ à $Y_4$ sont égaux ou différents et représentent l'hydrogène, un groupe alkyle en $C_1$ à $C_4$ ou un halogène et n est un nombre entier de 2 à 40, obtenus conformément au procédé de la revendication 1.

4. Procédé de production d'élastomères de polycarbonates aliphato-aromatique de haut poids moléculaire par le procédé à l' interface entre deux phases, caractérisé en ce qu'on fait réagir les polycarbonates aliphato-aromatiques à groupes diphénolcarbonate terminaux des revendications 2 et 3 avec d'autres diphénols et avec le phosgène dans un mélange liquide de solvants organiques inertes et de solution aqueuse alcaline à des températures comprises entre 0 et 80°C, à un pH compris entre 9 et 14, et après l'addition de phosgène, on effectue la polycondensation par addition de 0,2 à 10 moles % d'amine aliphatique tertiaire, par rapport à la quantité molaire de diphénol, le rapport en poids du polycarbonate aliphato-aromatique porteur de groupes diphénolcarbonate terminaux à l'autre diphénol étant déterminé par la portion désirée de polycarbonate aromatique et la portion de polycarbonate aliphatique des polycarbonates aliphato-aromatiques de haut poids moléculaire.

5. Procédé suivant la revendication 4, caractérisé en ce qu'on fait réagir comme autres diphénols, des phénols de formule (II)

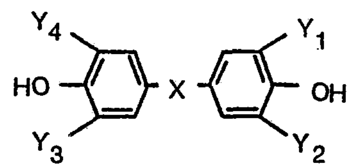

(II)

dans laquelle
X est une liaison simple, un groupe

—$CH_2$—, 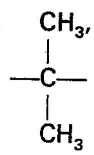 , 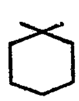 , $SO_2$, O, S ou un groupe 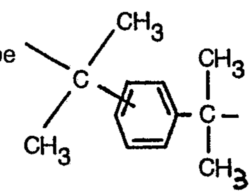 et

$Y_1$ à $Y_4$ sont ègaux ou différents et représentent de l'hydrogène, un groupe alkyle en $C_1$ à $C_4$ ou un halogène.